# EUROPÄISCHE PATENTSCHRIFT

(11) **EP 4 298 001 B1**
(45) Veröffentlichungstag und Bekanntmachung des Hinweises auf die Patenterteilung: **07.05.2025**
(21) Anmeldenummer: 22708865.5
(22) Anmeldetag: 15.02.2022
(51) Int. Cl.: B60W 30/182, B60W 60/00, B60W 30/14, B60W 30/10, B60W 30/18, B60W 50/00

(54) **VERFAHREN UND FAHRERASSISTENZSYSTEM ZUM UNTERSTÜTZEN EINES KRAFTFAHRZEUGS BEIM DURCHFÜHREN EINER KURVENFAHRT**
METHOD AND DRIVER ASSISTANCE SYSTEM FOR ASSISTING A MOTOR VEHICLE WHEN CORNERING
PROCÉDÉ ET SYSTÈME D'AIDE À LA CONDUITE POUR ASSISTER UN VÉHICULE AUTOMOBILE LORS D'UNE PRISE DE VIRAGE

(30) Priorität: 23.02.2021 DE 102021201677
(43) Veröffentlichungstag der Anmeldung: 03.01.2024
(73) Patentinhaber: VOLKSWAGEN AKTIENGESELLSCHAFT, 38440 Wolfsburg (DE)
(72) Erfinder: MÜNNING, Daniel, 38124 Braunschweig (DE); HOPPE, Jannis, 38100 Braunschweig (DE)
(86) Internationale Anmeldenummer: PCT/EP2022/053714
(87) Internationale Veröffentlichungsnummer: WO 2022/179893

(56) Entgegenhaltungen:
- WO-A1-2020/230300
- DE-A1- 102012 011 171
- DE-A1- 102016 220 406
- US-A1- 2018 194 365
- US-A1- 2020 180 617

## Beschreibung

Die Erfindung betrifft ein Verfahren zum Unterstützen einer Kurvenfahrt eines Kraftfahrzeugs mittels eines Fahrerassistenzsystems. Die Erfindung betrifft auch ein entsprechendes Fahrerassistenzsystem zum Unterstützen eines Kraftfahrzeugs für das Durchführen einer Kurvenfahrt.

Ein Fahrerassistenzsystem wird in einem Kraftfahrzeug üblicherweise eingesetzt, um einen Fahrer beim Führen des Kraftfahrzeugs zu unterstützen. Zum Beispiel kann ein Kraftfahrzeug mittels eines Fahrerassistenzsystems assistiert oder (teil-)automatisiert längsgeführt, also beschleunigt und abgebremst, werden. Das Fahrerassistenzsystem kann somit zum Halten oder Anpassen einer aktuellen Fahrgeschwindigkeit des Kraftfahrzeugs eingesetzt werden. So kann zum Beispiel eine vom Fahrer eingestellte Wunschgeschwindigkeit eingestellt und/oder auf eine erkannte Geschwindigkeitsbegrenzung für eine zulässige Verkehrsgeschwindigkeit reagiert werden. Zusätzlich oder alternativ ist eine assistierte oder (teil-)automatisierte Querführung, also ein Lenken des Kraftfahrzeugs mittels des Fahrerassistenzsystems, denkbar. Das Fahrerassistenzsystem kann somit bei einem Ändern der Fahrtrichtung des Kraftfahrzeugs assistieren. So kann zum Beispiel ein Spurhalten oder ein von dem Fahrer initiierter Spurwechsel vorgenommen werden.

Mit einem solchen Fahrerassistenzsystem kann zum Beispiel beim Durchführen einer Kurvenfahrt mit dem Kraftfahrzeug assistiert werden. Ein entsprechendes Verfahren ist beispielweise aus der DE 10 2016 215 046 A1 bekannt. Hierbei wird eine aktuelle Kraftfahrzeuggeschwindigkeit beim Durchfahren einer Kurve in Abhängigkeit von einem Kurvenparameter und einer Insassenpräferenz angepasst.

Aus der DE 10 2012 011 171 A1 ist zudem ein Verfahren zum Anzeigen einer empfohlenen Kurvengeschwindigkeit für einen Fahrer eines Fahrzeugs bekannt. Die empfohlene Kurvengeschwindigkeit kann der Fahrer nutzen, um das Kraftfahrzeug durch die Kurve zu führen.

Aus der US 2018/0194365 A1 ist ein Verfahren zum allgemeinen Assistieren einer Fahrt mit einem Kraftfahrzeug bekannt. Dabei werden abhängig von einem Fahrertypen und einem erkannten Fahrerzustand zumindest eine oder mehrere Assistenzfunktionen ausgewählt, um die Fahrt zu unterstützen.

Die DE 10 2016 220 406 A1 schlägt ein System für ein Kraftfahrzeug zum automatisierten Fahren vor, bei dem bei aktiver automatisierter Längsführung eine maximal zugelassene Maximalgeschwindigkeit ermittelt wird. Es wird weiter bei aktiver automatisierter Längsführung eine Längsregelung des Kraftfahrzeugs unter Berücksichtigung der ermittelten maximal zugelassenen Maximalgeschwindigkeit veranlasst. Dann wird bei aktiver automatisierter Längsführung die maximal zugelassene Maximalgeschwindigkeit in Abhängigkeit von vorliegenden Informationen einer automatisierten Querführung ermittelt.

Bei aktiver Querführung durch eine Kurve kann es jedoch rechtliche Vorgaben geben, die eine maximal zulässige oder erlaubte Kurvengeschwindigkeit, mit der das Kraftfahrzeug assistiert quergeführt durch die Kurve gelenkt werden darf, begrenzen. Bei aktiver Längsführung gibt es in der Regel keine solche rechtliche Vorgabe. Vielmehr hängt hier die Kurvengeschwindigkeit zum Beispiel von einer vom Fahrer eingestellten Wunschgeschwindigkeit oder einer aktuellen Verkehrsgeschwindigkeit ab. Soll das Kraftfahrzeug nun assistiert längs- und quergeführt durch die Kurve gefahren werden, kann es zu abweichenden Vorgaben für die einzustellende Fahrgeschwindigkeit zum Durchfahren der Kurve kommen.

Es ist die Aufgabe der Erfindung, eine Diskrepanz zwischen unterschiedlichen Geschwindigkeitsvorgaben für eine assistierte oder (teil-)automatisierte Kurvenfahrt aufzulösen.

Diese Aufgabe wird durch die Gegenstände der unabhängigen Patentansprüche gelöst. Weitere mögliche Ausgestaltungen der Erfindung sind in den Unteransprüchen, der Beschreibung und den Figuren offenbart.

In der Erfindung geht es um ein Verfahren zum Unterstützen einer Kurvenfahrt eines Kraftfahrzeugs mittels eines Fahrerassistenzsystems von dem zwei unterschiedliche Assistenzmodi bereitgestellt werden. Mit "bereitgestellt" ist beispielweise gemeint, dass fahrerseitig zum Beispiel beide Assistenzmodi wahrnehmbar sind. So kann zum Beispiel ein Fahrer des Kraftfahrzeugs einen der Modi nach Wunsch oder Präferenz auswählen und/oder aktivieren, um ihm bei der Fahrt zu assistieren. Alternativ ist es denkbar, dass die beiden Assistenzmodi fahrerseitig gemeinsam in einem Kombinationsmodus zur Auswahl für den Fahrer bereitgestellt werden. Fahrerseitig ist dann zum Beispiel nur der Kombinationsmodus wahrnehmbar und kann zum Assistieren bei der Fahrt ausgewählt und/oder aktiviert werden. Die Unterscheidung zwischen den Modi kann somit zum Beispiel nur noch auf Technikebene, also im Hintergrund erfolgen.

In einem ersten der Assistenzmodi wird ein assistiertes Querführen und Längsführen des Kraftfahrzeugs durchgeführt oder bereitgestellt. Bei aktiviertem ersten Assistenzmodus wird somit sowohl ein Beschleunigen (positiv und negativ) oder ein Halten der Fahrgeschwindigkeit als auch ein Lenken des Kraftfahrzeugs zumindest teilweise übernommen. Der erste Assistenzmodus kann zum Beispiel ein sogenannter Travel Assist (Reiseassistent) sein.

Im Gegensatz dazu wird in einem zweiten der Assistenzmodi nur das assistierte Längsführen des Kraftfahrzeugs durchgeführt oder bereitgestellt. Bei aktiviertem zweiten Assistenzmodus wird somit nur das Beschleunigen oder Halten der Fahrgeschwindigkeit des Kraftfahrzeugs umgesetzt. Der zweite Assistenzmodus kann zum Beispiel eine sogenannte Active Cruise Control (ACC, automatische Distanzregelung) sein.

Mit assistiert ist im vorliegenden Zusammenhang gemeint, dass die jeweilige Assistenzfunktion zum Unterstützen des Fahrers bei bestimmten Fahraufgaben durchgeführt oder ausgeführt wird. Es kann vorliegend unter assistiert auch ein (teil-)automatisiertes Fahren verstanden werden, sodass das Kraftfahrzeug einzelne Fahraufgaben oder Fahrfunktionen zumindest zeitweise ohne Eingriff des Fahrers ausführen kann.

Die beiden Assistenzmodi können sich dabei in ihrer Assistenzfunktion der Längsführung überlagern. Das heißt, bei aktiviertem ersten Assistenzmodus können für die Längsführung beispielweise Geschwindigkeitsdaten des zweiten Assistenzmodus genutzt werden. So kann zum Beispiel der Travel Assist auf Geschwindigkeitsdaten des ACC betreffend die Längsführung, wie etwa eine einzustellende Fahrgeschwindigkeit, zurückgreifen. Unabhängig vom ausgewählten Assistenzmodus kann als Fahrgeschwindigkeit somit zum Beispiel eine eingestellte Wunschgeschwindigkeit des Fahrers oder eine aktuell zulässige Verkehrsgeschwindigkeit gehalten oder eingestellt werden. Mit "eingestellt" ist dabei gemeint, dass auf die Wunschgeschwindigkeit oder Verkehrsgeschwindigkeit beispielsweise beschleunigt oder abgebremst werden kann.

Anders ist es, wenn das Kraftfahrzeug assistiert durch eine Kurve geführt werden soll. Bei aktiver Querführung, also aktiviertem ersten Assistenzmodus sind dabei für die einzustellende Fahrgeschwindigkeit die zuvor beschriebenen Vorgaben für die maximal erlaubte Kurvengeschwindigkeit zu beachten. Eine solche Vorgabe ist zum Beispiel aus der Richtlinie UN ECE R79 bekannt. Darin ist eine maximale Querbeschleunigung, der das Kraftfahrzeug beim Durchfahren einer Kurve höchstens ausgesetzt sein darf, bestimmt. Die maximale Querbeschleunigung kann zum Beispiel unter Berücksichtigung einer Fahrgeschwindigkeit und einer Kurvengeometrie der Kurve vorgegeben sein. Die Kurvengeometrie kann zum Beispiel Daten betreffend einen Kurvenradius und/oder eine Fahrbahnbreite umfassen. Je schneller ein Kraftfahrzeug nun durch die Kurve fährt, desto höher ist die Querbeschleunigung, die auf das Kraftfahrzeug wirkt. Da die Querbeschleunigung für die aktive Lenkung jedoch limitiert ist, ergibt sich dadurch auch eine Begrenzung für die erlaubte Kurvengeschwindigkeit. Für die assistierte Querführung wird die erlaubte Kurvengeschwindigkeit somit unter Berücksichtigung der vorgegebenen Querbeschleunigung bestimmt.

Im Gegensatz dazu ergibt sich eine vorgegebene Kurvengeschwindigkeit für die aktive Längsführung, wie zuvor beschrieben, zum Beispiel aus der eingestellten Wunschgeschwindigkeit oder der Verkehrsgeschwindigkeit. Die erlaubte Kurvengeschwindigkeit für die assistierte Querführung kann in bestimmten Fahrsituationen somit von der für die Längsführung vorgegebenen Kurvengeschwindigkeit abweichen.

Es stehen für das assistierte Durchfahren der Kurve mit aktiviertem ersten Assistenzmodus, bei dem sowohl die Querführung als auch die Längsführung umgesetzt werden sollen, somit potentiell zwei unterschiedliche Kurvengeschwindigkeiten zur Verfügung. Die erste potentielle Kurvengeschwindigkeit ist die erlaubte Kurvengeschwindigkeit, die für die assistierte Querführung beispielsweise gesetzlich vorgegeben ist. Die zweite potentielle Kurvengeschwindigkeit ist die vorgegebene Kurvengeschwindigkeit, die für die assistierte Längsführung beispielsweise als Wunschgeschwindigkeit des Fahrers vorgegeben ist.

In der Erfindung soll nun diese Diskrepanz zwischen den unterschiedlichen Geschwindigkeitsvorgaben aufgelöst und dabei eine der beiden potentiellen Kurvengeschwindigkeiten gegenüber der anderen priorisiert werden. Dazu wird in dem erfindungsgemäßen Verfahren die erste potentielle Kurvengeschwindigkeit für das Durchfahren der vorausliegenden Kurve in dem ersten Assistenzmodus mit der zweiten potentiellen Kurvengeschwindigkeit für das Durchfahren der Kurve in dem zweiten Assistenzmodus verglichen. Falls der Vergleich zwischen den beiden potentiellen Kurvengeschwindigkeiten ergibt, dass die erste potentielle Kurvengeschwindigkeit kleiner ist als die zweite potentielle Kurvengeschwindigkeit, wird unter Anwendung einer vorbestimmten Auswahlroutine eine der potentiellen Kurvengeschwindigkeiten als ein Sollwert für die einzustellende Fahrgeschwindigkeit das Durchfahren der Kurve ausgewählt. Auf die konkrete Ausgestaltung der Auswahlroutine wird später noch näher eingegangen.

Je nachdem, welche der potentiellen Kurvengeschwindigkeiten gemäß der Auswahlroutine ausgewählt wird, sind nun zwei mögliche Szenarien für das assistierte Durchführen der Kurvenfahrt möglich. Für den Fall, dass die erste potentielle Kurvengeschwindigkeit als Sollwert ausgewählt wird, wird der erste Assistenzmodus für das Durchfahren der Kurve genutzt. Mit Nutzen ist insbesondere gemeint, dass der erste Assistenzmodus entweder ausgewählt, also neu eingestellt wird, oder beibehalten, also bereits aktiviert gewesen ist und nun weiterhin genutzt wird. Bevorzugt wird das Kraftfahrzeug somit während der gesamten Fahrt durch die oder entlang der Kurve assistiert längs- und quergeführt, wobei für die Längsführung die langsamere Travel Assist Geschwindigkeit genutzt wird.

Für den Fall, dass hingegen die zweite potentielle Kurvengeschwindigkeit gemäß der Auswahlroutine als Sollwert ausgewählt wird, wird der erste Assistenzmodus für das Durchfahren der Kurve nur solange genutzt, bis eine aktuelle Querbeschleunigung des Kraftfahrzeugs die vorgegebene Querbeschleunigung überschreitet. Danach wird von dem ersten Assistenzmodus in den zweiten Assistenzmodus umgeschaltet. Mit danach ist vorliegend insbesondere zeitlich nachher gemeint. Somit kann das Umschalten beispielsweise zeitlich verzögert oder sofort in dem Moment, in dem die aktuelle Querbeschleunigung die vorgegebene Querbeschleunigung überschreitet, erfolgen. Beim Umschalten von dem ersten in den zweiten Assistenzmodus wird das Kraftfahrzeug somit nur noch assistiert oder (teil-)automatisiert längsgeführt. Die Querführung hat dann händisch zu erfolgen. Das heißt, der Fahrer muss die Lenkung selbst übernehmen. Es kommt somit zumindest kurvenabschnittsweise zu einer Deaktivierung der Querführung.

Falls die zweite potentielle Kurvengeschwindigkeit als Sollwert ausgewählt ist, kann eine Anzeigeeinrichtung, also beispielsweise ein Display oder Kombiinstrument oder Head-up-Display, des Kraftfahrzeugs angesteuert werden. Dadurch wird ein Fahrerhinweis betreffend ein Deaktiviert-Sein des ersten Assistenzmodus angezeigt und an den Fahrer bereitgestellt. Das Deaktiviert-Sein kann beispielsweise durch Ausblenden eines dem ersten Assistenzmodus zugeordneten Symbols dargestellt werden.

Durch Nutzen der Auswahlroutine ergibt sich der Vorteil, dass die Diskrepanz zwischen den unterschiedlichen Geschwindigkeitsvorgaben für die Kurvenfahr aufgelöst wird. Gemäß der Auswahlroutine wird eine der beiden potentiellen Kurvengeschwindigkeiten priorisiert.

Mit Kurve ist im Sinne der Erfindung nicht nur ein gesamter Streckenabschnitt, durch den die Kurve gebildet ist, gemeint. Stattdessen kann unter dem Begriff "Kurve" auch wenigstens ein Abschnitt der Kurve (Kurvenabschnitt) oder eine Gruppe von Kurven verstanden werden.

Zu der Erfindung gehören auch Ausführungsformen, auf die im Folgenden näher eingegangen wird.

Es ist bei dem Verfahren weiter vorgesehen, dass die erste potentielle Kurvengeschwindigkeit in Abhängigkeit von einem ersten vorgegebenen Kurvendatensatz und einer aktuellen Fahrgeschwindigkeit unter Berücksichtigung der vorgegebenen Querbeschleunigung bestimmt wird. Die zweite potentielle Kurvengeschwindigkeit wird entsprechend in Abhängigkeit von einem von dem ersten Kurvendatensatz unterschiedlichen zweiten vorgegebenen Kurvendatensatz und der aktuellen Fahrgeschwindigkeit bestimmt.

Bei dem ersten Kurvendatensatz kann es sich beispielsweise um einen oder mehrere Parameter betreffend eine Geometrie der Kurve handeln. Dazu zählen zum Beispiel ein Kurvenradius, eine Fahrbahnbreite und/oder eine Länge der Kurve. Zum Erfassen des ersten Kurvendatensatzes kann eine Kameraeinrichtung des Kraftfahrzeugs, wie zum Beispiel eine Frontkamera, eingesetzt werden. Mit dieser wird ein vorausliegender Umgebungshorizont erfasst oder abgefilmt. Die resultierenden Bilddaten können mittels bekannten Bildverarbeitungsverfahren, wie etwa einer Mustererkennung, ausgewertet und dadurch der ersten Kurvendatensatz herausgearbeitet werden. Dazu kann zum Beispiel ein neuronales Netz eingesetzt werden. Um daraus die erste potentielle Kurvengeschwindigkeit zu bestimmen, kann zum Beispiel mit einem in der Kameraeinrichtung simulierten Fahrzeugmodell in Echtzeit, also live, eine zu erwartende Querbeschleunigung für das Kraftfahrzeug in der vorausliegenden Kurve berechnet werden. Die Berechnung kann empirisch mit Hilfe eines neuronalen Netzes erfolgen.

Ergibt sich bei der Berechnung eine größere zu erwartende Querbeschleunigung als die vorgegebene Querbeschleunigung oder ist die zu erwartende Querbeschleunigung um mehr als einen vorbestimmten Toleranzbetrag größer als die vorgegebene Querbeschleunigung, wird die aktuelle Fahrgeschwindigkeit soweit reduziert, bis die Querbeschleunigungsvorgabe eingehalten ist. Der Toleranzbetrag kann zum Beispiel 10 % eines Werts der vorgegebenen Querbeschleunigung betragen. Andernfalls wird zum Beispiel die aktuelle Fahrgeschwindigkeit oder eine vorgegebene Setzgeschwindigkeit, durch die die vorgegebene Querbeschleunigung in der Kurve noch eingehalten wird, als die erste potentielle Kurvengeschwindigkeit festgelegt oder eingestellt. Die Setzgeschwindigkeit kann beispielsweise die vorgenannte Wunschgeschwindigkeit des Fahrers oder die vorgenannte Verkehrsgeschwindigkeit sein, auf die das Kraftfahrzeug beschleunigt oder abgebremst werden soll. Somit kann sich das Kraftfahrzeug auch beim Durchfahren der Kurve in einer Beschleunigungsphase befinden.

Bei dem zweiten Kurvendatensatz kann es sich zum Beispiel um Streckendaten, also einen oder mehrere Parameter betreffend die aktuelle Fahrstrecke handeln. Dazu zählt zum Beispiel eine Geschwindigkeitsbegrenzung, die durch Verkehrszeichen und/oder Verkehrsteilnehmer vorgegeben ist. Zusätzlich oder alternativ kann zum Beispiel eine Schwarmgeschwindigkeit, also eine durchschnittliche Fahrgeschwindigkeit von mehreren anderen Kraftfahrzeugen, die die Kurve bereits durchfahren haben, als ein solcher Parameter bereitgestellt werden. Der zweite Kurvendatensatz kann beispielweise durch Auswerten von digitalen Kartendaten, die von einer dem Fahrerassistenzsystem zugeordneten Navigationseinrichtung bereitgestellt werden, ermittelt werden. Zusätzlich oder alternativ ist ein Bereitstellen des zweiten Kurvendatensatzes durch Auswerten von Abstandsmessdaten eines Radarsystems des Kraftfahrzeugs denkbar.

Alternativ zu der vorgenannten Ausführungsform ist es möglich, dass die beiden potentiellen Kurvengeschwindigkeiten beispielweise aus einem gemeinsamen Kurvendatensatz, wie er zuvor beispielhaft beschreiben wurde, bestimmt werden. Insbesondere wird dabei die erste Kurvengeschwindigkeit aus dem gemeinsamen Kurvendatensatz unter Berücksichtigung der vorgegeben Querbeschleunigung bestimmt, während die zweite Kurvengeschwindigkeit auf Basis einer anderen Präferenz bestimmt wird. Das heißt, ein Sollwert für die zweite Kurvengeschwindigkeit kann zum Beispiel ohne Berücksichtigung der Querführungsgrenzen errechnet werden.

In den folgenden Ausführungsformen wird nun näher auf die vorgenannte Auswahlroutine eingegangen.

Dazu ist in einer Ausführungsform der Erfindung vorgesehen, dass die Auswahlroutine nur dann durchgeführt wird, wenn die erste Kurvengeschwindigkeit gemäß dem Vergleich zumindest um einen vorgegebenen Grenzbetrag von der zweiten Kurvengeschwindigkeit abweicht. Das heißt, die erste Kurvengeschwindigkeit sollte kleiner oder gleich einer Differenz aus der zweiten Kurvengeschwindigkeit und dem Grenzbetrag sein, damit die Auswahlroutine durchgeführt wird. Der Grenzbetrag kann beispielsweise als ein Geschwindigkeitswert von 10 km/h oder 15 km/h oder 20 km/h vorgegeben sein. Dadurch wird vermieden, dass der Fahrer bereits bei kleinen Abweichungen auf den Konflikt des Fahrerassistenzsystems hingewiesen wird.

In einer weiteren Ausführungsform ist in Zusammenhang mit der Auswahlroutine vorgesehen, dass der Sollwert in Abhängigkeit von einem eingestellten Fahrprofilmodus des Kraftfahrzeugs ausgewählt wird. Den Fahrprofilmodus kann das Fahrerassistenzsystem beispielsweise aus Systemeinstellungsdaten des Kraftfahrzeugs erfassen. Der Fahrprofilmodus kann zum Beispiel von einem Fahrer des Kraftfahrzeugs mittels einer Bedieneingabe eingestellt werden. Wird als Fahrprofilmodus nun zum Beispiel ein dynamischer Fahrbetrieb, also beispielsweise ein Sportmodus, erfasst, wird in der Auswahlroutine die schnellere der beiden Kurvengeschwindigkeiten, also die zweite potentielle Kurvengeschwindigkeit ausgewählt. Ist hingegen beispielsweise ein Komfortmodus oder ein Eco-Modus als Fahrprofilmodus ausgewählt, kann die langsamere Kurvengeschwindigkeit, also die erste potentielle Kurvengeschwindigkeit, als Sollwert eingestellt werden. Hierdurch ergibt sich der Vorteil, dass eine Fahrerpräferenz für die Priorisierung der Kurvengeschwindigkeit berücksichtigt wird.

In einer weiteren Ausführungsform wird der Sollwert gemäß der Auswahlroutine in Abhängigkeit von einer Schaltknaufstellung, welche einen jeweiligen Getriebemodus des Kraftfahrzeugs repräsentiert, ausgewählt. Das Kraftfahrzeug kann dabei zum Beispiel ein Doppelkupplungsgetriebe aufweisen. Üblicherweise werden von einem solchen Doppelkupplungsgetriebe (DSG) zwei unterschiedliche Getriebemodi, nämlich ein manueller Modus und ein automatisierter Modus, zum Betreiben des Kraftfahrzeugs bereitgestellt. Bei dem manuellen Modus erfolgt ein Gangwechsel dabei über eine Bedieneingabe des Fahrers, zum Beispiel über eine Schaltwippe. Im Automatikmodus wird der Gangwechsel hingegen automatisiert, also ohne Zutun des Fahrers und somit selbstständig durchgeführt. Wird anhand der Schaltknaufstellung nun der manuelle Modus erkannt, kann zum Beispiel die zweite potentielle Kurvengeschwindigkeit für das Durchfahren der Kurve ausgewählt werden. Bei Einstellung des manuellen Modus kann nämlich davon ausgegangen werden, dass der Fahrer das Kraftfahrzeug möglichst selbst führen möchte und bereit ist, insbesondere die Lenkung jederzeit zu übernehmen. Im Automatikmodus kann hingegen eher davon ausgegangen werden, dass der Fahrer ein möglichst vollständig automatisiertes oder assistiertes Durchfahren der Kurve wünscht. Auch hierdurch ergibt sich der Vorteil, dass die Fahrerpräferenz bei der Auswahl der Kurvengeschwindigkeit berücksichtigt wird.

In einer weiteren Ausführungsform wird der Sollwert gemäß der Auswahlroutine in Abhängigkeit von einem erfassten Insassenzustand eines jeweiligen Insassen des Kraftfahrzeugs ausgewählt. Mit Insassenzustand ist insbesondere ein physischer oder gesundheitlicher Zustand des jeweiligen Insassen des Kraftfahrzeugs, insbesondere einem Fahrer gemeint. Es geht insbesondere darum, durch Erfassen des Insassenzustands ein Unwohlsein oder eine Müdigkeit eines der Insassen zu erkennen und den Sollwert entsprechend auszuwählen. Dabei kann bei Feststellen eines Insassenzustands, der das Unwohlsein oder die Müdigkeit des Insassen repräsentiert, der erste potentielle Kurvengeschwindigkeitswert ausgewählt werden. Andernfalls wird der zweite potentielle Kurvengeschwindigkeitswert als Sollwert ausgewählt.

Dadurch kann vermieden werden, dass die Querführung in der Kurve abgebrochen wird, obwohl der Fahrer durch seinen Zustand gerade vom Verkehrsgeschehen abgelenkt ist. Durch Auswählen der langsameren Kurvengeschwindigkeit für die assistierte Querführung kann auch eine Verschlechterung des Insassenzustands während der Fahrt vermieden werden.

Das Fahrerassistenzsystem kann den Insassenzustand beispielsweise anhand von Beobachtungsdaten oder Bilddaten mittels einer Insassenbeobachtungseinrichtung, wie beispielsweise eine Innenraumkamera, erfassen. Durch Auswerten der Beobachtungsdaten mittels bekannter Bildverarbeitungsverfahren, wie beispielsweise einer Mustererkennung, kann daraus ein Zustandswert betreffend den jeweiligen Insassenzustand erfasst werden. Der Zustandswert gibt somit darüber Aufschluss, ob dem jeweiligen Insassen zum Beispiel unwohl ist oder nicht. Mit "unwohl" ist dabei gemeint, dass dem Insassen schwindlig und/oder schlecht ist. Als Zustandswert kann beispielsweise ein Farbton des Gesichts eines Insassen, eine Pupillenweite, ein Hautleitwert, ein Feuchtigkeitswert, der zum Beispiel auf eine vermehrte Schweißbildung bei dem Insassen hindeutet, eine Herzfrequenz, ein sonstiger Vitalwert und/oder ein weiterer den physikalischen oder gesundheitlichen Zustand beschreibender Wert erfasst werden. Zum Bestimmen, ob dem Insassen unwohl ist oder nicht, kann überprüft werden, ob der erfasste Zustandswert in einem jeweils vorgegebenen Grenzwertebereich liegt. Der Grenzwertebereich legt zum Beispiel einen Bereich fest, der dem Unwohlsein des Insassen zugeordnet ist. Innerhalb des Grenzwertebereichs kann somit darauf geschlossen werden, dass dem Insassen unwohl ist. Außerhalb des Grenzwertebereichs kann hingegen ein Wohlsein des Insassen bestätigt werden.

In einer weiteren Ausführungsform wird der Sollwert gemäß der Auswahlroutine in Abhängigkeit von einem erfassten Aufmerksamkeitszustand des Fahrers des Kraftfahrzeugs ausgewählt. Es geht also darum zu bestimmen, wie aufmerksam der Fahrer den Betrieb des Kraftfahrzeugs und/oder ein Verkehrsgeschehen aktuell beobachtet oder verfolgt. Dabei kann bei Feststellen eines Aufmerksamkeitszustand, der eine Unaufmerksamkeit des Fahrers repräsentiert, der erste potentielle Kurvengeschwindigkeitswert ausgewählt werden. Andernfalls wird der zweite potentielle Kurvengeschwindigkeitswert als Sollwert ausgewählt.

Hierdurch ergibt sich der Vorteil, dass überprüft wird, ob der Fahrer bereit ist, beim Umschalten von dem ersten Assistenzmodus in den zweiten Assistenzmodus zügig die Lenkung des Kraftfahrzeugs selbst zu übernehmen. Somit kann ein Ausscheren des Kraftfahrzeugs vermieden und dadurch eine Verkehrssicherheit verbessert werden.

Um den Aufmerksamkeitszustand zu bestimmen, kann zum Beispiel überprüft werden, ob und/oder wie und/oder mit welcher Griffkraft der Fahrer das Lenkrad umgreift. Zusätzlich oder alternativ kann zum Bestimmen des Aufmerksamkeitszustands eine Blickrichtung des Fahrers überprüft werden. Dazu kann beispielsweise eine Innenraumkamera des Kraftfahrzeugs und/oder eine kapazitive Sensorvorrichtung im Lenkrad des Kraftfahrzeugs eingesetzt werden.

Gemäß einer weiteren Ausführungsform wird der Sollwert in der Auswahlroutine in Abhängigkeit von erfassten Wetterdaten in einer Umgebung des Kraftfahrzeugs ausgewählt. Die Wetterdaten beschreiben dabei aktuelle Wetterverhältnisse in der Umgebung des Kraftfahrzeugs. Mit Umgebung sind dabei insbesondere eine aktuelle Route sowie zukünftig potentiell von dem Kraftfahrzeug befahrene Streckenabschnitte gemeint. Es geht insbesondere darum, durch Erfassen der Wetterdaten eine Beeinträchtigung des Fahrbetriebs aufgrund von Witterungsverhältnissen zu erkennen und den Sollwert entsprechend auszuwählen. Dabei kann bei Feststellen von Wetterdaten, die eine Beeinträchtigung des Fahrbetriebs repräsentieren, der erste potentielle Kurvengeschwindigkeitswert ausgewählt werden. Andernfalls wird der zweite potentielle Kurvengeschwindigkeitswert als Sollwert ausgewählt.

Die Wetterdaten kann das Fahrerassistenzsystem beispielsweise von extern zum Beispiel mittels eines Kommunikationsmoduls erfassen. Alternativ kann das Kraftfahrzeug selbst mit Wettersensoren ausgestattet sein, um die Wetterdaten zu erfassen und an das Fahrerassistenzsystem bereitzustellen. Von den Wetterdaten kann beispielsweise ein oder mehrere wetterbezogene Werte, wie etwa ein Temperaturwert, ein Feuchtigkeitswert, ein Sonnenstand und/oder weitere wetterbezogene Parameter umfasst sein. Zum Feststellen, ob aufgrund der Wetterdaten die Beeinträchtigung des Fahrbetriebs vorliegt, kann Überprüft werden, ob der jeweilige wetterbezogene Wert innerhalb eines vorbestimmten Grenzwertebereichs liegt. Der Grenzwertebereich gibt dabei ein Intervall vor, in dem die Beeinträchtigung bestätigt wird. So kann zum Beispiel für Temperaturen unter 4 Grad, einen Sonnenstand kleiner als 30 Grad ausgehend von einer Fahrbahnoberfläche, Nebelbildung, oder Feuchtigkeitswerte, die auf einen benässten Fahrbahnbelag rückschließen lassen, die Beeinträchtigung bestätigt werden.

Hierdurch ergibt sich der Vorteil, dass die Kurvengeschwindigkeit an aktuelle Witterungsverhältnisse angepasst wird. Dadurch kann bei einer glatten oder feuchten Straße oder bei schlechter Sicht der Fahrbetrieb des Kraftfahrzeugs angepasst und dadurch die Verkehrssicherheit verbessert werden.

In einer weiteren Ausführungsform ist in Zusammenhang mit der Auswahlroutine vorgesehen, dass der Sollwert in Abhängigkeit von erfassten Schwarmdaten eines Kraftfahrzeugschwarms ausgewählt wird, wobei die Schwarmdaten eine durchschnittliche Kurvengeschwindigkeit des Kraftfahrzeugschwarms für das Durchfahren der Kurve umfassen. Mit Kraftfahrzeugschwarm ist dabei eine Vielzahl von weiteren Kraftfahrzeugen gemeint, die die Kurve zeitlich vor dem Kraftfahrzeug durchfahren haben.

Um den Sollwert auszuwählen, kann ein Schwarmgeschwindigkeitswert, also die durchschnittliche Kurvengeschwindigkeit des Kraftfahrzeugschwarms, ermittelt und mit den ersten und zweiten potentiellen Kurvengeschwindigkeitswert verglichen werden. Als Sollwert für die Kurvengeschwindigkeit kann dann beispielsweise diejenige der beiden Kurvengeschwindigkeiten ausgewählt werden, deren Betrag näher an dem Schwarmgeschwindigkeitswert liegt. Zusätzlich oder alternativ kann für die beiden potentiellen Kurvengeschwindigkeitswerte auch jeweils ein Grenzbetrag festgelegt werden, um den die potentiellen Kurvengeschwindigkeitswerte höchste von dem Schwarmgeschwindigkeitswert abweichen dürfen. Weicht eine der beiden Kurvengeschwindigkeitswerte um mehr als den Grenzbetrag ab, wird diese Kurvengeschwindigkeit als Sollwert verworfen und die jeweils andere potentielle Kurvengeschwindigkeit als Sollwert ausgewählt. Zum Beispiel kann als jeweiliger Grenzbetrag 50 Prozent der Schwarmgeschwindigkeit festgelegt sein.

Hierdurch ergibt sich der Vorteil, dass ein zusätzliches Überprüfungskriterium für Plausibilität der ermittelten potentiellen Kurvengeschwindigkeit ergibt.

Alternativ zu den vorgenannten Möglichkeiten, welche der potentiellen Kurvengeschwindigkeiten als Sollwert gewählt wird, kann die Auswahl abhängig von einer Voreinstellung des Fahrers erfolgen. Somit kann beispielsweise der Fahrer festlegen, dass immer die erste potentielle Kurvengeschwindigkeit oder immer die zweite potentielle Kurvengeschwindigkeit im Konfliktfall als Sollwert für das Durchfahren der Kurve genutzt werden soll.

Insbesondere kann für die Auswahl des Sollwerts gemäß der Auswahlroutine eine weitere potentielle Kurvengeschwindigkeit berücksichtigt werden. Die weitere potentielle Kurvengeschwindigkeit kann zum Beispiel die vorgenannte Schwarmgeschwindigkeit oder ein Mittelwert aus der ersten und zweiten potentiellen Kurvengeschwindigkeit sein. Diese kann dann wiederrum mit der ersten potentielle Kurvengeschwindigkeit verglichen werden. Falls der Vergleich ergibt, dass die weitere potentielle Kurvengeschwindigkeit kleiner ist als die erste potentielle Kurvengeschwindigkeit, kann eine der potentiellen Kurvengeschwindigkeiten als Sollwert für das Durchfahren der Kurve unter Anwendung der vorbestimmten Auswahlroutine ausgewählt werden. Für den Fall, dass dabei die weitere potentielle Kurvengeschwindigkeit als Sollwert ausgewählt wird, kann entsprechend der erste Assistenzmodus für das Durchfahren der Kurve genutzt werden, bis die aktuelle Querbeschleunigung des Kraftfahrzeugs die vorgegebene Querbeschleunigung überschreitet. Danach kann zum Beispiel in den zweiten Assistenzmodus umgeschaltet werden.

Die Erfindung betrifft auch ein Fahrerassistenzsystem zum Unterstützen eines Kraftfahrzeugs und/oder dessen Fahrers beim Durchführen einer Kurvenfahrt, wie es zuvor beschrieben wurde. Die Erfindung kann auch ein Kraftfahrzeug mit einem entsprechenden Fahrerassistenzsystem betreffen.

Die Zeichnungen zeigen in:
- Fig. 1: eine schematische Darstellung eines Kraftfahrzeugs, das zum assistierten Durchführen einer Kurvenfahrt auf eine Kurve zufährt,
- Fig. 2: eine schematische Darstellung eines Verfahrensablaufdiagramms mit einzelnen Verfahrensschritten zum Auswählen einer Kurvengeschwindigkeit für das Kraftfahrzeug zum Durchführen der Kurvenfahrt, und
- Fig. 3: eine schematische Darstellung eines der Verfahrensschritte gemäß Fig. 2 betreffend die Auswahl der Kurvengeschwindigkeit abhängig von einem Fahrbetriebsmodus des Kraftfahrzeugs.

Gleiche oder funktionsgleiche Elemente sind in den Figuren mit den gleichen Bezugszeichen versehen.

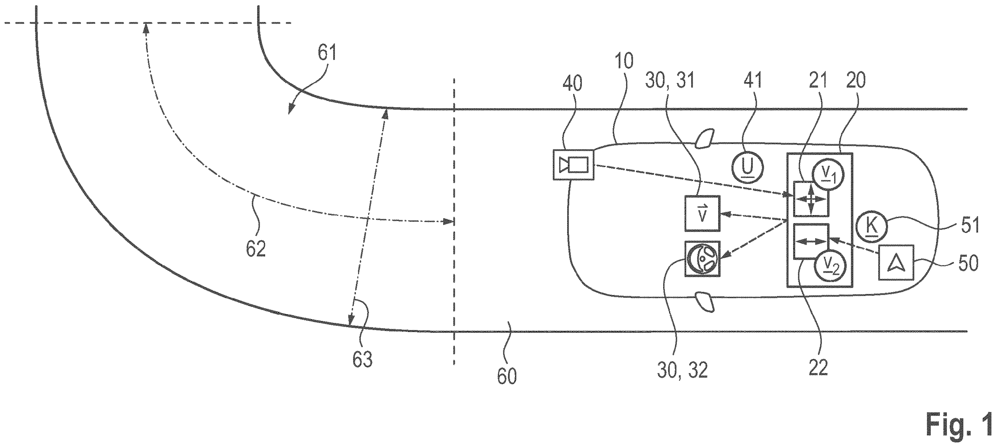

Fig. 1 zeigt eine schematische Darstellung eines Kraftfahrzeugs 10 aus einer Vogelperspektive. Das Kraftfahrzeug 10 wird in einem Fahrbetrieb betreiben und befindet sich während der Fahrt aktuell auf einem geraden Streckenabschnitt einer Fahrbahn 60 und fährt auf eine vorausliegende Kurve 61 der Fahrbahn 60 bildet zu. Wie in Fig. 1 dargestellt, umfasst das Kraftfahrzeug 10 ein Fahrerassistenzsystem 20. Mit dem Fahrerassistenzsystem 20 wird der Fahrbetrieb des Kraftfahrzeugs 10 unterstützt und insbesondere assistiert und/oder (teil-)automatisiert, also zumindest teilweise ohne Eingriff eines in Fig. 1 nicht dargestellten Fahrers durchgeführt. Von dem Fahrerassistenzsystem 20 sind zwei unterschiedliche Assistenzmodi 21, 22 bereitgestellt, zwischen denen der Fahrer zum Unterstützen des Fahrbetriebs auswählen kann. Der erste Assistenzmodus 21 ermöglicht ein assistiertes Querführen und Längsführen des Kraftfahrzeugs 10. Ist der erste Assistenzmodus 21 aktiviert, kann das Kraftfahrzeug 10 somit assistiert gelenkt (querführen) und zudem auch assistiert beschleunigt, also dessen Geschwindigkeit geändert (längsführen), werden. Der erste Assistenzmodus 21 wird im Folgenden auch als Travel Assist (Reiseassistent) bezeichnet. In dem zweiten Assistenzmodus 22 ist hingegen nur das assistierte Längsführen des Kraftfahrzeugs 10 bereitgestellt. Der zweite Assistenzmodus 22 wird im Folgenden auch als Active Cruise Control oder ACC (automatische Distanzregelung) bezeichnet.

Um das assistierte Querführen und/oder Längsführen bei jeweils aktiviertem Assistenzmodus 21, 22 bereitzustellen, wird mittels des Fahrerassistenzsystems 20 eine den Fahrbetrieb betreffende Komponente 30 des Kraftfahrzeugs 10 mit einem entsprechenden Steuerbefehl angesteuert. Für die Längsführung wird beispielsweise als Komponente 30 eine Geschwindigkeitsregelanlage 31 des Kraftfahrzeugs 10 angesteuert. Als Steuersignal wird der Geschwindigkeitsregelanlage 31 beispielsweise ein Sollwert oder Setzwert für eine gewünschte einzustellende Fahrgeschwindigkeit oder ein der gewünschten Fahrgeschwindigkeit zugeordneter Parameter, wie etwa ein Beschleunigungswert, bereitgestellt. Für die Querführung wird als Komponente 30 beispielsweise eine Lenkanlage 32 des Kraftfahrzeugs 10 angesteuert. Als Steuersignal kann beispielsweise ein gewünschter Sollwert oder Setzwert für einen Lenkwinkel oder Einschlagswinkel von dem Fahrerassistenzsystem 20 bereitgestellt werden.

Um das Kraftfahrzeug assistiert quer- und längsgeführt zu betreiben, können der erste Assistenzmodus 21 und der zweite Assistenzmodus 22 beispielsweise überlagert genutzt werden. In der überlagerten Nutzung wird der erste Assistenzmodus 21 beispielsweise dem zweiten Assistenzmodus 22 zugeschaltet. Das heißt, in dem ersten Assistenzmodus 21 werden Daten betreffend die Längsführung, wie etwa die gewünschte einzustellenden Fahrgeschwindigkeit, analog zu dem zweiten Assistenzmodus 22 bestimmt. Wie die einzustellende Fahrgeschwindigkeit im zweiten Assistenzmodus 22 festgelegt wird, wird später noch näher erläutert.

Durch die überlagerte Nutzung der beiden Assistenzmodi 21, 22 zur assistierten Quer- und Längsführung kann es jedoch beim Durchführen einer Kurvenfahrt zu einem Konflikt für das Fahrerassistenzsystem 20 kommen. Denn beim Durchführen der Kurvenfahrt in dem ersten Assistenzmodus 21 ist eine Limitierung einer maximalen vorgegebenen Querbeschleunigung, der das Kraftfahrzeug 10 beim Durchfahren der Kurve 61 ausgesetzt sein darf, zu beachten. Die Vorgaben an die Limitierung der maximalen Querbeschleunigung richten sich dabei zum Beispiel nach gesetzlichen Vorgaben oder Richtlinien. Eine solche Limitierung der Querbeschleunigung ist zum Beispiel aus der Richtlinie UN ECE R79 bekannt. Demnach darf die Querbeschleunigung eines Kraftfahrzeugs beim Durchfahren einer Kurve zum Beispiel höchstens 3 m/s² betragen. Durch diese Limitierung ist auch eine Fahrgeschwindigkeit mit der die Kurve 61 assistiert quergeführt durchfahren werden darf, eingeschränkt. Die Fahrgeschwindigkeit mit der die Kurve 61 assistiert quergeführt durchfahren werden darf wird im Folgenden auch als erste potentielle Kurvengeschwindigkeit v1 bezeichnet.

Um die Limitierung der Querbeschleunigung bei aktiver Querführung zu berücksichtigen, wird in dem ersten Assistenzmodus 21 die erste potentielle Kurvengeschwindigkeit v1 unter Berücksichtigung der vorgegebenen Querbeschleunigung und in Abhängigkeit von einem ersten Kurvendatensatz 41 und der aktuell gemessenen Fahrgeschwindigkeit bestimmt. Zum Erfassen des ersten Kurvendatensatz 41 umfasst das Kraftfahrzeug 10 in Fig. 1 eine Kameraeinrichtung 40, die beispielhaft als Frontkamera ausgebildet ist. Mittels der Kameraeinrichtung 10 wird ein vorausliegender Umgebungshorizonts des Kraftfahrzeugs 10 aufgenommen und die resultierenden Bilddaten ausgewertet. Durch das Auswerten wird aus den Bilddaten der erste Kurvendatensatz 41 herausgearbeitet. Der erste Kurvendatensatz 41 umfasst wenigstens einen oder mehrere Parameter betreffend eine Geometrie der vorausliegenden Kurve 61. So können beispielsweise von dem Kurvendatensatz eine Länge der Kurve 62 und eine Fahrbahnbreite 63 umfasst sein. Aus den Parametern wird anschließend eine Krümmung oder ein Krümmungsradius der Kurve 61 bestimmt. Abhängig von der erkannten Kurvengeometrie wird danach, beispielsweise in Echtzeit, also live während des Zufahrens des Kraftfahrzeugs 10 auf die Kurve 61 eine zu erwartende Querbeschleunigung des Kraftfahrzeugs 10 für das Durchfahren der Kurve 61 beim Beibehalten der aktuell gemessenen Fahrgeschwindigkeit berechnet werden. Die Berechnung kann beispielsweise empirisch mithilfe eines neuronalen Netzes, das dem Kraftfahrzeug 10 zugeordnet ist, erfolgen. Die zu erwartende Querbeschleunigung wird dann mit der vorgenannten vorgegebenen Querbeschleunigung verglichen.

Wenn die zu erwartende Querbeschleunigung in der Kurve 61 gemäß dem Vergleich kleiner ist als die vorgegebene Querbeschleunigung, wird beispielsweise die aktuelle Fahrgeschwindigkeit des Kraftfahrzeugs 10 zum Durchführen der Kurvenfahrt beibehalten. Die erste potentielle Kurvengeschwindigkeit v1 wird somit als die aktuelle Fahrgeschwindigkeit festgelegt. Ergibt sich hingegen eine größere zu erwartende Querbeschleunigung, als die vorgegebene Querbeschleunigung, ist die aktuelle Fahrgeschwindigkeit so weit zu reduzieren, bis der Grenzwert der vorgegebenen Querbeschleunigung wieder eingehalten ist. In diesem Fall wird die erste potentielle Kurvengeschwindigkeit v1 somit als eine mit der vorgegebenen Querbeschleunigung korrespondierenden Sollgeschwindigkeit festgelegt. Durch Bestimmen der erste potentielle Kurvengeschwindigkeit v1 unter Berücksichtigung der vorgegebenen Querbeschleunigung kann sich deshalb eine Begrenzung der Fahrgeschwindigkeit, mit der das Kraftfahrzeug 10 durch die Kurve 61 geführt werden darf, ergeben.

Unabhängig von der Begrenzung der Fahrgeschwindigkeit durch den ersten Assistenzmodus 21 wird aufgrund der vorgenannten überlagerten Nutzung beider Assistenzmodi 21, 22 für das assistierte quer- und längsgeführte Durchführen der Kurvenfahrt noch eine zweite potentielle Kurvengeschwindigkeit v2 ermittelt. Die zweite potentielle Kurvengeschwindigkeit v2 ist dabei diejenige Fahrgeschwindigkeit, die in dem zweiten Assistenzmodus 22 für das Durchfahren der Kurve 61 bestimmt wird und durch die überlagerte Nutzung der Assistenzmodi 21, 22 auch als potentielle Fahrgeschwindigkeit für die Längsführung bei aktiviertem ersten Assistenzmodus 21 in Betracht gezogen werden kann.

Die zweite potentielle Kurvengeschwindigkeit v2 wird dabei in Abhängigkeit von Streckendaten und der aktuell gemessenen Fahrgeschwindigkeit bestimmt. Für das Durchführen der Kurvenfahrt können diese Streckendaten auch als zweiter Kurvendatensatz 51 bezeichnet werden. Der zweite Kurvendatensatz 51 oder die Streckendaten können zum Beispiel durch Auswerten von digitalen Kartendaten, die von einer dem Fahrerassistenzsystem 20 zugeordneten Navigationseinrichtung 50 bereitgestellt werden, ermittelt werden. Bei den Streckendaten kann es sich zum Beispiel um Verkehrsdaten, wie etwa eine mittels Verkehrszeichenerkennung erkannte Geschwindigkeitsbegrenzung für den jeweils befahrenen Streckenabschnitt, handeln. Somit kann die zweite potentielle Kurvengeschwindigkeit v2 durch die Mittel der Geschwindigkeitsbegrenzung vorgegebenen Fahrgeschwindigkeit festgelegt sein. Alternativ dazu kann die zweite potentielle Kurvengeschwindigkeit v2 zum Beispiel einer vom Fahrer voreingestellten Fahrgeschwindigkeit und somit der aktuellen Fahrgeschwindigkeit des Kraftfahrzeugs 10 entsprechen.

Es ergeben sich für die assistierte quer- und längsgeführte Kurvenfahrt somit verschiedene potentielle Kurvengeschwindigkeiten v1, v2. Häufig ist die zweite potentielle Kurvengeschwindigkeit v2 dabei größer als die erste potentielle Kurvengeschwindigkeit v1. Beim Nutzen der ersten potentiellen Kurvengeschwindigkeit v1 als einzustellende Fahrgeschwindigkeit würde das Kraftfahrzeug 10 zwar langsamer durch die Kurve 61 geführt werden, allerdings könnte die Kurvenfahrt vollständig assistiert oder (teil-)automatisiert quer- und längsgeführt durchgeführt werden. Beim Nutzen der zweiten potentiellen Kurvengeschwindigkeit v2 als einzustellende Fahrgeschwindigkeit würde das Kraftfahrzeug 10 hingegen dynamischer durch die Kurve 61 geführt werden, allerdings müsste die Lenkung zumindest Kurvenabschnittsweise händisch übernommen werden.

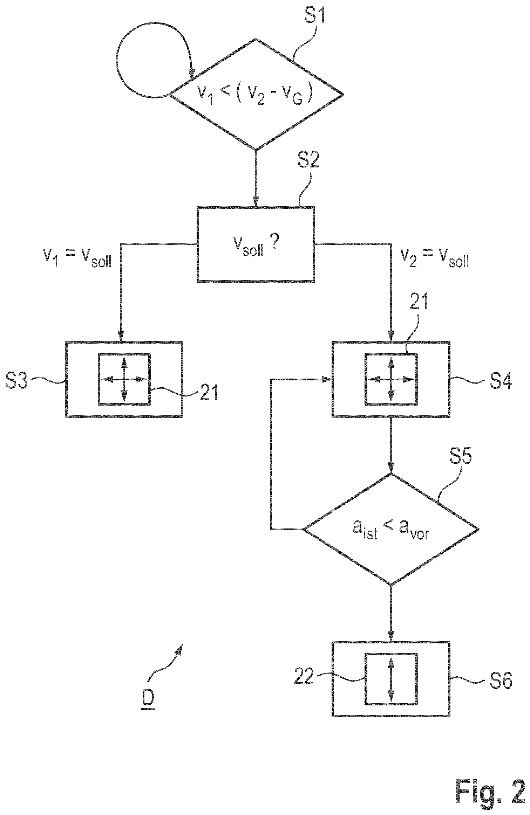

Für das Durchführen der Kurvenfahrt liegen dem Fahrerassistenzsystem somit zwei unterschiedliche potentielle Kurvengeschwindigkeiten v1, v2 vor, aus denen das Fahrerassistenzsystem 20 eine als Sollwert zum Einstellen der neuen Fahrgeschwindigkeit auswählen muss. Wie diese Auswahl erfolgen kann, ist beispielhaft anhand von Fig. 2 näher erläutert.

Fig. 2 zeigt dazu ein schematisches Verfahrensablaufdiagramm mit einzelnen Verfahrensschritten zum Auswählen einer der beiden potentiellen Kurvengeschwindigkeiten v1, v2, um das Kraftfahrzeug 10 beim Durchführen der Kurvenfahrt zu unterstützen. Dabei wird in einem Schritt S1 zunächst die erste potentielle Kurvengeschwindigkeit v1 mit der zweiten potentiellen Kurvengeschwindigkeit verglichen. In dem Vergleich wird, wie in Fig. 2 gezeigt, beispielsweise überprüft, ob die erste Kurvengeschwindigkeit v1 kleiner ist als eine Differenz aus der zweiten Kurvengeschwindigkeit und einem vorgegebenen Grenzbetrag v_{G}.

Der Grenzbetrag v_{G} kann beispielsweise 5 km/h oder 10 km/h betragen. Ergibt der Vergleich gemäß Schritt S1, dass die erste potentielle Kurvengeschwindigkeit v1 von der zweiten potentiellen Kurvengeschwindigkeit v2 um weniger als den vorgegebenen Grenzbetrag v_{G} abweicht, wird der Schritt S1 für das Durchführen der Kurvenfahrt gemäß dem Verfahrensablaufdiagramm D wiederholt. Wird hingegen festgestellt, dass die erste potentielle Kurvengeschwindigkeit v1 kleiner ist als die zweite potentielle Kurvengeschwindigkeit v2 abzüglich des Grenzbetrags v_{G}, wird das Verfahren in einem Schritt S2 fortgesetzt.

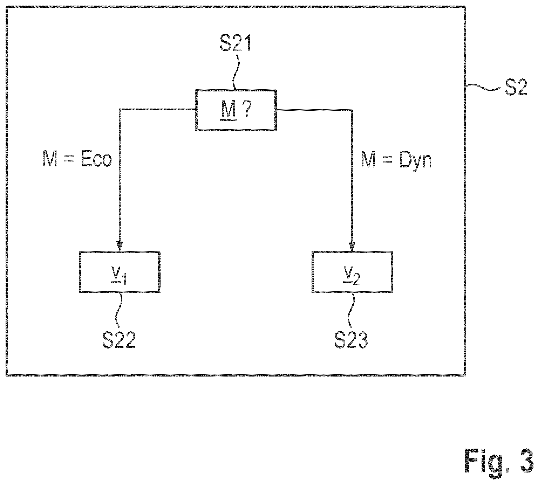

In dem Schritt S2 wird eine Auswahlroutine durchgeführt, mittels welcher genau eine der beiden potentiellen Kurvengeschwindigkeiten v1 oder v2 für das Durchfahren der Kurve ausgewählt wird. Es wird somit der Sollwert vₛₒₗₗ für die Längsführung bestimmt. Unter welchen Kriterien welche der beiden potentiellen Kurvengeschwindigkeiten v1 oder v2 gemäß der Auswahlroutine ausgewählt wird, wird später anhand von Fig. 3 noch näher beschrieben.

Gemäß Fig. 2 wird das Verfahren in einem Schritt S3 fortgesetzt, wenn als die Sollgeschwindigkeit vₛₒₗₗ die erste potentielle Kurvengeschwindigkeit v1 für das Durchfahren der Kurve ausgewählt wird. Gemäß dem Schritt S3 wird dabei das erste Assistenzmodul 21 genutzt, um das Kraftfahrzeug 10 für das Durchfahren der Kurve assistiert quer und längs zu führen. Dementsprechend kann der erste Assistenzmodus 21 für die Kurvenfahrt beibehalten werden. Die Kurve 61 wird somit zwar langsamer, aber vollständig längs- und quergeführt durchfahren.

Wird gemäß der Auswahlroutine in Schritt S2 hingegen die zweite potentielle Kurvengeschwindigkeit v2 als Sollgeschwindigkeit vₛₒₗₗ ausgewählt, wird das Verfahren in einem Schritt S4 fortgesetzt. In dem Schritt S4 wird ebenfalls zunächst der erste Assistenzmodus 21 für das Durchfahren der Kurve genutzt. Während des Durchführens der Kurvenfahrt wird dabei aber in einem Schritt S5 kontinuierlich überprüft, ob die aktuelle Querbeschleunigung aᵢₛₜ des Kraftfahrzeugs 10 kleiner ist als die zuvor genannte vorgegebene Querbeschleunigung aᵥₒᵣ. Hierbei wird bevorzugt ein Toleranzband für die Abweichung der zu erwartenden Querbeschleunigung aᵢₛₜ von der vorgegebenen Querbeschleunigung aᵥₒᵣ berücksichtigt. Das heißt, es kann ein Querbeschleunigungsgrenzbetrag gewählt sein, welcher zum Beispiel als 10 Prozent von der vorgegebenen Querbeschleunigung festgelegt sein kann.

Wird in Schritt S5 festgestellt, dass die zu erwartende Querbeschleunigung aᵢₛₜ kleiner als die vorgegebene Querbeschleunigung ist, wird in dem Verfahren erneut zu Schritt S4 zurückgesprungen. Wird in Schritt S5 hingegen festgestellt, dass die zu erwartende Querbeschleunigung aᵢₛₜ in der Kurve größer als die vorgegebene Querbeschleunigung aᵥₒᵣ ist, wird das Verfahren in einem Schritt S6 fortgeführt.

In dem Schritt S6 wird dann von dem ersten Assistenzmodus 21 in den zweiten Assistenzmodus 22 umgeschaltet. Somit wird das Kraftfahrzeug 10 für das Durchfahren der Kurve 61 oder zumindest eines Abschnitts der Kurve 61 nur noch assistiert längsgeführt. Die Querführung, also die Lenkung ist dann von dem Fahrer händisch zu übernehmen. Zusammengefasst, wird bei Auswahl der zweiten potentiellen Kurvengeschwindigkeit v2 als Sollgeschwindigkeit vₛₒₗₗ gemäß Schritt S2 der erste Assistenzmodus 21 für das Durchfahren der Kurve 61 nur solange genutzt, bis die aktuelle Querbeschleunigung aᵢₛₜ die vorgegebene Querbeschleunigung aᵥₒᵣ überschreitet. Danach wird von dem ersten Assistenzmodus 21 in den zweiten Assistenzmodus umgeschaltet. Das heißt, die Querführung des Kraftfahrzeugs 10 beim Durchfahren der Kurve kann zumindest kurvenabschnittsweise oder temporär deaktiviert werden.

Fig. 3 zeigt nun noch einmal eine schematische Darstellung eines Verfahrensablaufdiagramms mit einzelnen Verfahrensunterschritten zu Schritt S2, die durchgeführt werden, um gemäß der vorgenannten Auswahlroutine eine der beiden potentiellen Kurvengeschwindigkeiten v1, v2 als die Sollgeschwindigkeit vₛₒₗₗ auszuwählen. Gemäß Fig. 3 erfolgt die Auswahl dabei in Abhängigkeit von einem eingestellten Fahrprofilmodus M des Kraftfahrzeugs 10. Dazu wird in einem Unterschritt S21 zunächst gemäß der Auswahlroutine überprüft, welcher Fahrprofilmodus M des Kraftfahrzeugs 10 aktuell eingestellt ist. Das Fahrerassistenzsystem 20 kann den Fahrprofilmodus M beispielsweise anhand von Systemeinstellungen, die in einer nicht gezeigten Speichereinrichtung des Kraftfahrzeugs hinterlegt sind und zum Beispiel von einem Fahrer vorgegeben sind, erfassen. Ist als Fahrprofilmodus M dabei ein Komfortmodus ECO eingestellt oder hinterlegt, wird das Verfahren in einem Unterschritt S22 fortgesetzt. In dem Schritt S22 wird die erste potentielle Kurvengeschwindigkeit v1 als Sollgeschwindigkeit vₛₒₗₗ zum Durchfahren der Kurve ausgewählt. Wird anhand der Systemeinstellungen hingegen ein Dynamikmodus DYN als der Fahrprofilmodus M erfasst, wird das Verfahren in einem Unterschritt S23 fortgesetzt. In dem Unterschritt S23 wird die zweite potentielle Kurvengeschwindigkeit v2 als Sollgeschwindigkeit für das Durchfahren der Kurve 61 ausgewählt.

Alternativ oder zusätzlich zu der in Fig. 3 gezeigten Ausgestaltung der Auswahlroutine gemäß Schritt S2 kann das Auswählen des Sollwerts vₛₒₗₗ in Abhängigkeit von einem erfassten Insassenzustand eines jeweiligen Insassen des Kraftfahrzeugs 10 erfolgen. Als Insassenzustand kann ein Müdigkeitswertes des Insassen, wie beispielsweise des Fahrers, angibt, erfasst werden. Der Müdigkeitswert gibt an, ob der Insasse müde ist oder nicht und spiegelt somit ein Müdigkeitsniveau des Insassen wieder. Es geht insbesondere darum, durch Erfassen des Insassenzustands eine Müdigkeit eines der Insassen zu erkennen und den Sollwert vₛₒₗₗ entsprechend auszuwählen. Dabei kann bei Feststellen eines Insassenzustands, der die Müdigkeit des Insassen repräsentiert, der erste potentielle Kurvengeschwindigkeitswert v1 ausgewählt werden. Andernfalls wird der zweite potentielle Kurvengeschwindigkeitswert v2 als Sollwert vₛₒₗₗ ausgewählt. Der Müdigkeitswert kann beispielsweise ein Lidöffnungswinkel eines Auges des Insassen oder eine Blinzelfrequenz des Insassen sein. Zum Erfassen des Müdigkeitswerts kann das Fahrerassistenzsystem 20 beispielsweise mittels einer Insassenkamera Beobachtungsdaten oder Bilddaten des Insassen erfassen und auswerten. Zum Auswerten können beispielsweise bekannte Bildverarbeitungsverfahren, wie etwa eine Mustererkennung, eingesetzt werden. Somit kann die Auswahl der Sollgeschwindigkeit vₛₒₗₗ für das Durchfahren der Kurve 61 abhängig davon ausgewählt werden, ob der Fahrer beispielsweise bereit ist, die Querführung während des Durchfahrens der Kurve 61 jederzeit zu übernehmen oder ob die Reaktionszeit des Fahrers aufgrund seiner Müdigkeit voraussichtlich eingeschränkt ist.

Zusätzlich oder alternativ ist es denkbar, die Auswahl aus den beiden potentiellen Kurvengeschwindigkeiten v1, v2 gemäß der Auswahlroutine in Schritt S2 abhängig von erfassten Schwarmdaten eines Kraftfahrzeugschwarms zu treffen. Die Schwarmdaten umfassen dabei eine durchschnittliche Kurvengeschwindigkeit des Kraftfahrzeugschwarms (Schwarmgeschwindigkeit) für das Durchfahren der Kurve 61. Somit kann beispielsweise in der Auswahlroutine überprüft werden, ob die erste potentielle Kurvengeschwindigkeit v1 und die zweite potentielle Kurvengeschwindigkeit v2 um einen vorbestimmten Grenzbetrag von der Schwarmgeschwindigkeit abweicht. Als Grenzbetrag kann beispielsweise ein Wert vorgegeben sein, der um 50 Prozent von der ermittelten Schwarmgeschwindigkeit abweicht.

Durch den Grenzbetrag werden Intervallgrenzen für ein Schwarmgeschwindigkeitsintervall bestimmt, in welchem die erste potentielle Kurvengeschwindigkeit v1 und die zweite potentielle Kurvengeschwindigkeit v2 liegen sollten, um bei der Auswahl berücksichtigt zu werden. Es kann somit eine Plausibilitätsprüfung für die Auswahl der Sollgeschwindigkeit durchgeführt werden. Liegt eine der beiden potentiellen Kurvengeschwindigkeiten v1, v2 dabei außerhalb des Intervalls, wird diejenige Kurvengeschwindigkeit v1, v2 als unplausibel verworfen. Die andere der beiden Kurvengeschwindigkeiten v1, v2 wird dann als Sollgeschwindigkeit vₛₒₗₗ ausgewählt. Liegen beide potentiellen Kurvengeschwindigkeiten v1, v2 in dem Schwarmgeschwindigkeitsintervall, kann beispielsweise diejenige ausgewählt werden, die näher an der vorgegebenen Schwarmgeschwindigkeit liegt. Liegen beide potentiellen Kurvengeschwindigkeiten v1, v2 aber außerhalb des vorgegebenen Schwarmintervalls, kann zum Beispiel die ermittelte Schwarmgeschwindigkeit als neuer Sollwert vₛₒₗₗ festgelegt werden. In diesem Fall kann das Verfahren gemäß Fig. 2 dann beispielsweise in dem vorgenannten Schritt S4 weitergeführt werden.

Insgesamt ist durch die Beispiele gezeigt, wie mithilfe von unterschiedlichen Assistenzmodi eine Kurvengeschwindigkeit eines Kraftfahrzeugs für das assistierte oder (teil-)automatisierte Durchführen einer Kurvenfahrt optimiert werden kann.

### Bezugszeichenliste

| | | | |
|---|---|---|---|
| 10 | Kraftfahrzeug | v1 | erste potentielle Kurvengeschwindigkeit |
| 20 | Fahrerassistenzsystem | v2 | zweite potentielle Kurvengeschwindigkeit |
| 21 | erster Assistenzmodus | | |
| 22 | zweiter Assistenzmodus | VG | Grenzbetrag |
| 30 | Komponente | Vₛₒₗₗ | Sollgeschwindigkeit |
| 31 | Geschwindigkeitsregelanlage | | |
| 32 | Lenkanlage | | |
| 40 | Umgebungserfassungseinrichtung | | |
| 41 | erster Kurvendatensatz | | |
| 50 | Navigationseinrichtung | | |
| 51 | zweiter Kurvendatensatz | | |
| 60 | Fahrbahn | | |
| 61 | Kurve | | |
| 62 | Kurvenlänge | | |
| 63 | Fahrbahnbreite | | |
| aᵢₛₜ | zu erwartende Querbeschleunigung | | |
| aᵥₒᵣ | vorgegebene Querbeschleunigung | | |
| D | Verfahrensablaufdiagramm | | |
| DYN | Dynamikmodus | | |
| ECO | Komfortmodus | | |
| M | Fahrbetriebsmodus | | |
| S1 | Verfahrensschritt | | |
| S2 | Verfahrensschritt | | |
| S3 | Verfahrensschritt | | |
| S4 | Verfahrensschritt | | |
| S5 | Verfahrensschritt | | |
| S6 | Verfahrensschritt | | |
| S21 | Unterschritt | | |
| S22 | Unterschritt | | |
| S23 | Unterschritt | | |

## Patentansprüche

1. Verfahren zum Unterstützen einer Kurvenfahrt eines Kraftfahrzeugs (10) mittels eines Fahrerassistenzsystems (20), wobei
von dem Fahrerassistenzsystem (20) zwei Assistenzmodi (21, 22) bereitgestellt werden, und
in einem ersten Assistenzmodus (21) ein assistiertes Querführen und Längsführen des Kraftfahrzeugs (10) durchgeführt wird, und
in einem zweiten Assistenzmodus (22) nur ein assistiertes Längsführen des Kraftfahrzeugs (10) durchgeführt wird,
folgende Schritte umfassend:
- Vergleichen einer ersten potentiellen Kurvengeschwindigkeit (v1) für ein Durchfahren einer Kurve (61) in dem ersten Assistenzmodus (21), die unter Berücksichtigung einer vorgegebenen Querbeschleunigung (aᵥₒᵣ) des Kraftfahrzeugs (10) für das Durchfahren der Kurve (61) ermittelt wird, mit einer zweiten potentiellen Kurvengeschwindigkeit (v2) für das Durchfahren der Kurve (61) in dem zweiten Assistenzmodus (22), und
- falls der Vergleich ergibt, dass die erste potentielle Kurvengeschwindigkeit (v1) kleiner ist als die zweite potentielle Kurvengeschwindigkeit (v2): Auswählen einer der potentiellen Kurvengeschwindigkeiten (v1, v2) als Sollwert (vₛₒₗₗ) für das Durchfahren der Kurve (61) unter Anwendung einer vorbestimmten Auswahlroutine, und
- für den Fall, dass die erste potentielle Kurvengeschwindigkeit (v1) als Sollwert (vₛₒₗₗ) ausgewählt wird: Nutzen des ersten Assistenzmodus (21) für das Durchfahren der Kurve (61), oder
- für den Fall, dass die zweite potentielle Kurvengeschwindigkeit (v2) als Sollwert (vₛₒₗₗ) ausgewählt wird: Nutzen des ersten Assistenzmodus (21) für das Durchfahren der Kurve (61) nur bis eine aktuelle Querbeschleunigung (aᵢₛₜ) des Kraftfahrzeugs (10) die vorgegebene Querbeschleunigung (aᵥₒᵣ) überschreitet, wonach von dem ersten Assistenzmodus (21) in den zweiten Assistenzmodus (22) umgeschaltet wird,
**dadurch gekennzeichnet dass**
die erste potentielle Kurvengeschwindigkeit (v1) in Abhängigkeit von einem ersten vorgegebenen Kurvendatensatz (41) und einer aktuellen Fahrgeschwindigkeit unter Berücksichtigung der vorgegebenen Querbeschleunigung (aᵥₒᵣ) bestimmt wird, und die zweite potentielle Kurvengeschwindigkeit (v2) in Abhängigkeit von einem von dem ersten Kurvendatensatz (41) unterschiedlichen zweiten vorgegebenen Kurvendatensatz (51) und der aktuellen Fahrgeschwindigkeit bestimmt wird.

2. Verfahren nach einem der vorhergehenden Ansprüche, wobei die Auswahlroutine nur dann durchgeführt wird, wenn die erste potentielle Kurvengeschwindigkeit (v1) gemäß dem Vergleich zumindest um einen vorgegeben Grenzbetrag (v_{G}) von der zweiten potentiellen Kurvengeschwindigkeit (v2) abweicht.

3. Verfahren nach einem der vorhergehenden Ansprüche, wobei der Sollwert (vₛₒₗₗ) gemäß der Auswahlroutine in Abhängigkeit von einem eingestellten Fahrprofilmodus (M) des Kraftfahrzeugs (10) ausgewählt wird.

4. Verfahren nach einem der vorhergehenden Ansprüche, wobei der Sollwert (vₛₒₗₗ) gemäß der Auswahlroutine in Abhängigkeit von einer Schaltknaufstellung, welche einen jeweiligen Getriebemodus des Kraftfahrzeugs (10) repräsentiert, ausgewählt wird.

5. Verfahren nach einem der vorhergehenden Ansprüche, wobei der Sollwert (vₛₒₗₗ) gemäß der Auswahlroutine in Abhängigkeit von einem erfassten Insassenzustand eines jeweiligen Insassen des Kraftfahrzeugs (10) ausgewählt wird.

6. Verfahren nach einem der vorhergehenden Ansprüche, wobei der Sollwert (vₛₒₗₗ) gemäß der Auswahlroutine in Abhängigkeit von einem erfassten Aufmerksamkeitszustand eines Fahrers des Kraftfahrzeugs (10) ausgewählt wird.

7. Verfahren nach einem der vorhergehenden Ansprüche, wobei der Sollwert (vₛₒₗₗ) gemäß der Auswahlroutine in Abhängigkeit von erfassten Wetterdaten in einer Umgebung des Kraftfahrzeugs (10) ausgewählt wird.

8. Verfahren nach einem der vorhergehenden Ansprüche, wobei der Sollwert (vₛₒₗₗ) gemäß der Auswahlroutine in Abhängigkeit von erfassten Schwarmdaten eines Kraftfahrzeugschwarms ausgewählt wird, wobei die Schwarmdaten eine durchschnittliche Kurvengeschwindigkeit des Kraftfahrzeugschwarms für das Durchfahren der Kurve (61) umfassen.

9. Fahrerassistenzsystem (20) zum Unterstützen eines Kraftfahrzeugs (10) beim Durchführen einer Kurvenfahrt nach einem der vorhergehenden Ansprüche.

## Claims

1. Method for assisting with cornering of a motor vehicle (10) by means of a driver assistance system (20), wherein
two assistance modes (21, 22) are provided by the driver assistance system (20), and
in a first assistance mode (21), assisted lateral and longitudinal guidance of the motor vehicle (10) is carried out, and
in a second assistance mode (22), only assisted longitudinal guidance of the motor vehicle (10) is carried out,
the method comprising the following steps:
- comparing a first potential cornering speed (v1) for driving through a curve (61) in the first assistance mode (21), which first potential cornering speed is determined taking into account a predetermined lateral acceleration (aᵥₒᵣ) of the motor vehicle (10) for driving through the curve (61), with a second potential cornering speed (v2) for driving through the curve (61) in the second assistance mode (22), and
- if the comparison shows that the first potential cornering speed (v1) is smaller than the second potential cornering speed (v2): selecting one of the potential cornering speeds (v1, v2) as the target value (vₛₒₗₗ) for driving through the curve (61) by applying a predetermined selection routine, and
- in the event that the first potential curve speed (v1) is selected as the target value (Vₛₒₗₗ): using the first assistance mode (21) for driving through the curve (61), or
- in the event that the second potential cornering speed (v2) is selected as the target value (vₛₒₗₗ): using the first assistance mode (21) for driving through the curve (61) only until a current lateral acceleration (aₛₜ) of the motor vehicle (10) exceeds the predetermined lateral acceleration (aᵥₒᵣ), after which the system switches from the first assistance mode (21) to the second assistance mode (22),
**characterized in that**
the first potential curve speed (v1) is determined depending on a first predetermined curve data set (41) and a current driving speed, taking into account the predetermined lateral acceleration (aᵥₒᵣ), and the second potential curve speed (v2) is determined depending on a second predetermined curve data set (51), which is different from the first curve data set (41), and the current driving speed.

2. Method according to any of the preceding claims, wherein the selection routine is carried out only if the first potential cornering speed (v1) deviates from the second potential cornering speed (v2) at least by a predetermined limit amount (V_{G}) according to the comparison.

3. Method according to any of the preceding claims, wherein the target value (vₛₒₗₗ) is selected according to the selection routine depending on a set driving profile mode (M) of the motor vehicle (10).

4. Method according to any of the preceding claims, wherein the target value (vₛₒₗₗ) is selected according to the selection routine depending on a gear knob position which represents a particular transmission mode of the motor vehicle (10).

5. Method according to any of the preceding claims, wherein the target value (vₛₒₗₗ) is selected according to the selection routine depending on a detected occupant state of a particular occupant of the motor vehicle (10).

6. Method according to any of the preceding claims, wherein the target value (vₛₒₗₗ) is selected according to the selection routine depending on a detected state of attention of a driver of the motor vehicle (10).

7. Method according to any of the preceding claims, wherein the target value (vₛₒₗₗ) is selected according to the selection routine depending on recorded weather data in an environment of the motor vehicle (10).

8. Method according to any of the preceding claims, wherein the target value (vₛₒₗₗ) is selected according to the selection routine depending on detected swarm data of a swarm of motor vehicles, wherein the swarm data comprise an average cornering speed of the swarm of motor vehicles for driving through the curve (61).

9. Driver assistance system (20) for assisting a motor vehicle (10) when cornering according to any of the preceding claims.

## Revendications

1. Procédé permettant d'assister un véhicule automobile (10) dans un virage au moyen d'un système d'aide à la conduite (20), dans lequel
deux modes d'aide (21, 22) sont fournis par le système d'aide à la conduite (20), et
dans un premier mode d'aide (21), un guidage transversal et un guidage longitudinal assistés du véhicule automobile (10) sont effectués, et
dans un second mode d'aide (22), seul un guidage longitudinal assisté du véhicule automobile (10) est effectué,
comprenant les étapes suivantes :
- comparaison d'une première vitesse de virage potentielle (v1) pour un passage d'un virage (61) dans le premier mode d'aide (21), laquelle est déterminée en prenant en compte une accélération transversale prédéfinie (aᵥₒᵣ) du véhicule automobile (10) pour le passage du virage (61), avec une seconde vitesse de virage potentielle (v2) pour le passage du virage (61) dans le second mode d'aide (22), et
- si la comparaison montre que la première vitesse de virage potentielle (v1) est inférieure à la seconde vitesse de virage potentielle (v2) : sélection de l'une des vitesses de virage potentielles (v1, v2) comme valeur de consigne (vₛₒₗₗ) pour le passage du virage (61) en utilisant une routine de sélection prédéterminée, et
- dans le cas où la première vitesse de virage potentielle (v1) est sélectionnée comme valeur de consigne (vₛₒₗₗ) : utilisation du premier mode d'aide (21) pour le passage du virage (61), ou
- dans le cas où la seconde vitesse de virage potentielle (v2) est sélectionnée comme valeur de consigne (vₛₒₗₗ) : utilisation du premier mode d'aide (21) pour le passage du virage (61) uniquement jusqu'à ce qu'une accélération transversale actuelle (aᵢₛₜ) du véhicule automobile (10) dépasse l'accélération transversale prédéfinie (aᵥₒᵣ), après quoi on passe du premier mode d'aide (21) au second mode d'aide (22),
**caractérisé en ce que**
la première vitesse de virage potentielle (v1) est déterminée en fonction d'un premier jeu de données de virage (41) prédéfini et d'une vitesse de déplacement actuelle en prenant en compte l'accélération transversale prédéfinie (aᵥₒᵣ), et la seconde vitesse de virage potentielle (v2) est déterminée en fonction d'un second jeu de données de virage (51) prédéfini et différent du premier jeu de données de virage (41), et de la vitesse de déplacement actuelle.

2. Procédé selon l'une des revendications précédentes, dans lequel la routine de sélection est effectué uniquement si la première vitesse de virage potentielle (v1) dévie, selon la comparaison, de la seconde vitesse de virage potentielle (v2) d'au moins une grandeur limite (V_{G}) prédéfinie.

3. Procédé selon l'une des revendications précédentes, dans lequel la valeur de consigne (vₛₒₗₗ) est sélectionnée selon la routine de sélection en fonction d'un mode de profil de conduite (M) réglé du véhicule automobile (10).

4. Procédé selon l'une des revendications précédentes, dans lequel la valeur de consigne (vₛₒₗₗ) est sélectionnée selon la routine de sélection en fonction d'une position du pommeau de levier de vitesse représentant un mode de transmission respectif du véhicule automobile (10).

5. Procédé selon l'une des revendications précédentes, dans lequel la valeur de consigne (vₛₒₗₗ) est sélectionnée selon la routine de sélection en fonction d'un état de passager détecté d'un passager respectif du véhicule automobile (10).

6. Procédé selon l'une des revendications précédentes, dans lequel la valeur de consigne (vₛₒₗₗ) est sélectionnée selon la routine de sélection en fonction d'un état d'attention détecté d'un conducteur du véhicule automobile (10).

7. Procédé selon l'une des revendications précédentes, dans lequel la valeur de consigne (vₛₒₗₗ) est sélectionnée selon la routine de sélection en fonction de données météorologiques détectées dans un environnement du véhicule automobile (10).

8. Procédé selon l'une des revendications précédentes, dans lequel la valeur de consigne (vₛₒₗₗ) est sélectionnée selon la routine de sélection en fonction de données d'essaim détectées d'un essaim de véhicules automobiles, dans lequel les données d'essaim comprennent une vitesse de virage moyenne de l'essaim de véhicules automobiles pour le passage du virage (61).

9. Système d'aide à la conduite (20) permettant d'assister un véhicule automobile (10) lors du passage d'un virage selon l'une des revendications précédentes.
